**Europäisches Patentamt**

**European Patent Office**

**Office européen des brevets**

(11) Veröffentlichungsnummer : **0 297 053 B1**

(12)

# EUROPÄISCHE PATENTSCHRIFT

(45) Veröffentlichungstag der Patentschrift :
**06.05.92 Patentblatt 92/19**

(51) Int. Cl.$^5$ : **F16B 13/00**

(21) Anmeldenummer : **88810425.4**

(22) Anmeldetag : **22.06.88**

(54) **Dübelverbindung.**

(30) Priorität : **24.06.87 CH 2367/87**

(43) Veröffentlichungstag der Anmeldung :
**28.12.88 Patentblatt 88/52**

(45) Bekanntmachung des Hinweises auf die
Patenterteilung :
**06.05.92 Patentblatt 92/19**

(84) Benannte Vertragsstaaten :
**AT BE DE ES FR GB GR IT LU NL SE**

(56) Entgegenhaltungen :
**DE-A- 3 400 279**
**DE-B- 1 161 674**
**DE-B- 1 291 458**

(73) Patentinhaber : **Wickihalter, Gerold**
**Alte Landstrasse 1**
**CH-8820 Wädenswil (CH)**

(72) Erfinder : **Wickihalter, Gerold**
**Alte Landstrasse 1**
**CH-8820 Wädenswil (CH)**

(74) Vertreter : **Rebmann, John A.**
**Rebmann-Kupfer & Co., Patentanwaltsbureau**
**In der Sommerau 9 Postfach 140**
**CH-8053 Zürich-Witikon (CH)**

Jouve, 18, rue Saint-Denis, 75001 PARIS

**Beschreibung**

Die Erfindung bezieht sich auf eine Duebelverbindung nach dem Oberbegriff des Anspruchs 1.

Eine solche Duebelverbindung zum Justieren des Abstandes einer Platte odgl. von einer Wand odgl. ist aus der DE-A-34 00 279 - NOLDE bekannt und weist einen in einer Bohrung der Platte sitzenden Halteteil auf, wobei eine Holzschraube durch den Halteteil durchgefuehrt und mit ihrem Kopf im Halteteil drehbar und zumindest in Richtung von der Platte weg axial unbewegbar gehalten ist. Dabei ist der Halteteil als in eine Erweiterung der Bohrung in der Platte eingepresste Huelse aus elastischem Werkstoff ausgebildet, deren Bohrung eine Hinterschneidung aufweist, in die der Kopf der Holschraube einrastbar ist. Dabei kann die Erweiterung der Bohrung auf der der Wand abgewandten Seite der Platte vorgesehen sein. Ausserdem kann die Huelse aussen widerhakenartige Umfangsvorspruenge aufweisen, mit welchen sie in der Erweiterung der Bohrung gegen Herausziehen verankert ist. Auch ist es moeglich, die Huelse mit von ihrem stirnseitigen Ende bis zur Hinterschneidung reichenden, axialen Schlitzen zu versehen.

Aufgabe der Erfindung ist es, eine solche bekannte Duebelverbindung zu verbessern, damit sie kostenguenstiger herzustellen ist, zuverlaessiger funktioniert und rasch und leicht zu montieren ist. Ausserdem soll die Duebelverbindung sehr praezise justierbar und dennoch leicht wieder loesbar sein.

Diese Aufgabe wird geloest durch die kennzeichnenden Merkmale des Anspruchs 1. Ausserdem koennen die Merkmale der Ansprueche 2 bis 8 vorgesehen werden.

Weitere Einzelheiten und Merkmale der Erfindung ergeben sich aus der Beschreibung eines Ausfuehrungsbeispiels der Erfindung anhand der Zeichnung. In dieser zeigt

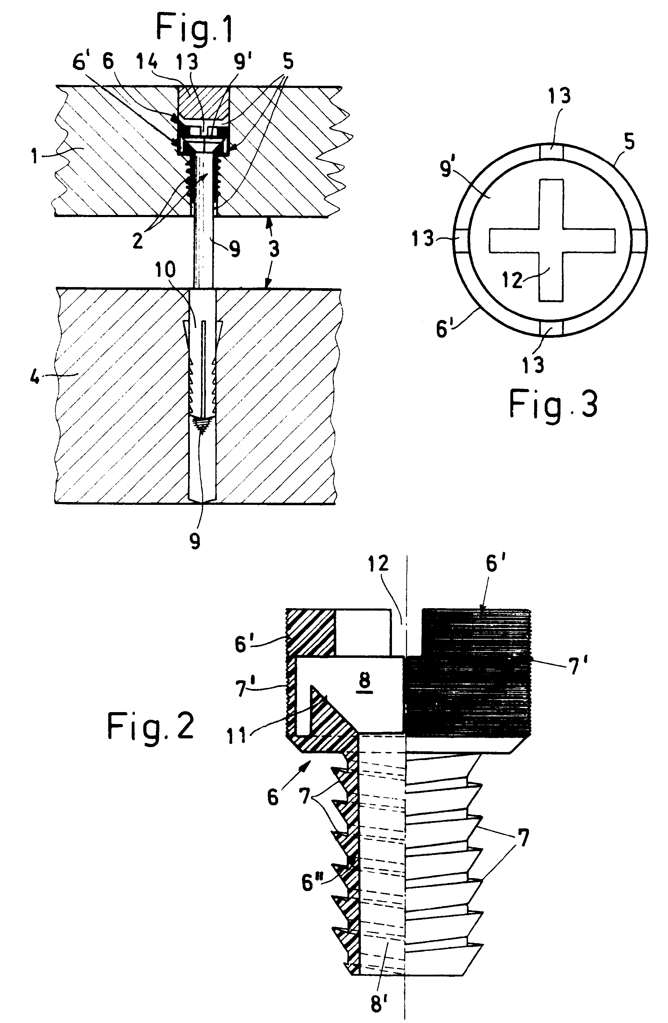

Fig. 1 eine Dübelverbindung im Vertikalschnitt bei zwei planen, im Abstand nebeneinander angeordneten Konstruktionsstücken,

Fig. 2 ein Verbindungshilfselement, teilweise in einer Seitenansicht und teilweise im Vertikalschnitt in grösserem Massstab und

Fig. 3 eine Draufsicht auf das Verbindungshilfselement mit eingesetzter Senkkopfschraube, inbezug zu Fig. 1 ebenfalls in grösserem Masstab.

Fig. 4 eine Variante des Verbindungshilfselementes teilweise im Vertikalschnitt,

Fig. 5 eine Draufsicht zu Fig. 4 und

Fig. 6 ein zweiteiliges Verbindungshilfselement, teilweise im Schnitt mit einer ausgeschwenkten Hälfte.

1 bezeichnet ein Konstruktionsstück, das durch die Dübelverbindung 2 mit dem in einem Abstand 3 zu diesem befindlichen Konstruktionsstück 4 angeordnet ist. Die Konstruktionsstücke 1, 4 können beliebiger Beschaffenheit und Gestaltung sein. 5 ist ein im Konstruktionsstück 1 angebrachtes, durch ein Bohrwerkzeug hergestelltes, vorgebildetes, abgestuftes Loch. Der weite Teil des Loches 5 befindet sich im Konstruktionsstück 1 oben, der schmale Teil dagegen unten. Im Loch 5 ist versenkt ein aus einem zähelastischen Kunststoff bestehendes, hohlzylindrisches Verbindungshilfselement 6 eingesteckt, das einen nach aussen erweiterten Bund 6' und einen mit einem Aussengewinde 7 versehenen Hohlschaft 6'' besitzt. Der Bund 6' enthält einen Innenraum 8, dessen lichte Weite grösser ist als der Hohlschaftinnenraum 8'. Das Aussengewinde 7 steht mit dem Konstruktionsstück 1 nicht in Eingriff, da die Innenwand des Loches kein Gegengewinde besitzt. Die Gänge des Aussengewindes 7, welche sägezahnartig sind, werden beim Eindrücken in den schmalen Teil des Loches 5 deformiert und üben auf die zugekehrte Innenwand einen elastischen Pressdruck aus, welcher die Halterung veranlasst. Die Gänge des Aussengewindes 7 sind sägezahnartig und erleichtern bei Drehungen das Einstecken des Verbindungshilfselementes 6 in den schmalen Teil des Loches 5. Die Aussenwandung des Bundes 6' am Verbindungshilfselement 6 ist zur Erhöhung der Adhäsion mit einer feinen, zahnartigen Riffelung 7' versehen. Im Bund 6' liegt der Kopf 9' der Senkkopfschraube 9, welch letztere den Hohlschaftinnenraum 8' durchsetzt und mit einer konventionellen, spreizbaren im zweiten Konstruktionsstück 4 fixierten Hülsenmutter 10 verschraubt ist. Die konische Unterseite des Kopfes 9' der Senkkopfschraube 9 liegt dem spitzwinkligen Stützring 11 an, welcher ein in den Innenraum 8 ragender Teil am Verbindungshilfselement 6 ist. 12 bezeichnet einen an der Oberseite des Kopfes 9' angebrachten Kreuzschlitz zum Einstecken des zum Verdrehen und zur Adjustierung verwendeten Schraubenziehers. Der Rand des Bundes 6' ist an seinem Oberteil mit vier Einschnitten 13 versehen; jeweils zwei derselben liegen einander diametral gegenüber und bezwecken das Dehnungsvermögen des Bundes 6' zu begünstigen. 14 ist ein in das Loch 5 eingeführter, herausnehmbarer Abschlusszapfen.

Das Verbindungshilfselement 6 besteht zweckmässig aus einem zähelastischen Kunststoff wie Polystrol oder dergleichen, das sich im Giess- oder Spritzverfahren leicht und relativ billig herstellen lässt.

Bei der erfindungsgemässen Dübelverbindung ist der Kopf 9' der Senkkopfschraube 9 nach Herausnahme des Abschlusszapfens 14 gut zugänglich, die Druckspannung und die Festhaltekraft des Verbindungshilfselementes 6 im Konstruktionsstück 1 lässt sich schnell adjustieren und auf das zuträgliche Belastungsvermögen einstellen. Die Dübelverbindung eignet sich für Werkstücke mit flachen und unregelmässigen Oberflächen, die einander anliegen oder im Abstand zueinander stehen.

Die Wand des Loches 5 im Verbindungshilfselement 6 mit dem Bund 6′ erfordert kein Gegengewinde zur Einführung der Senkkopfschraube 9. Die zähelastische Beschaffenheit des Verbindungshilfselementes 6 ermöglicht das Einschrauben der Senkkopfschraube 9, da deren Holzgewinde sich selbst einschneidet. Die zähelastische Beschaffenheit erzeugt einen Reibungsverschluss und eine elastische Verbindung, welche Erschütterungen sowie Vibrationen standhält.

Liegen die Konstruktionsstücke 1, 4 einander dicht an, so greift der Spitzenteil der Senkkopfschraube 9 direkt in das Konstruktionsstück 4 ein und ist mit diesem verschraubt, in welchem Fall sich die Hülsenmutter 10 erübrigt. Eine solche Variante ist zeichnerisch nicht besonders dargestellt.

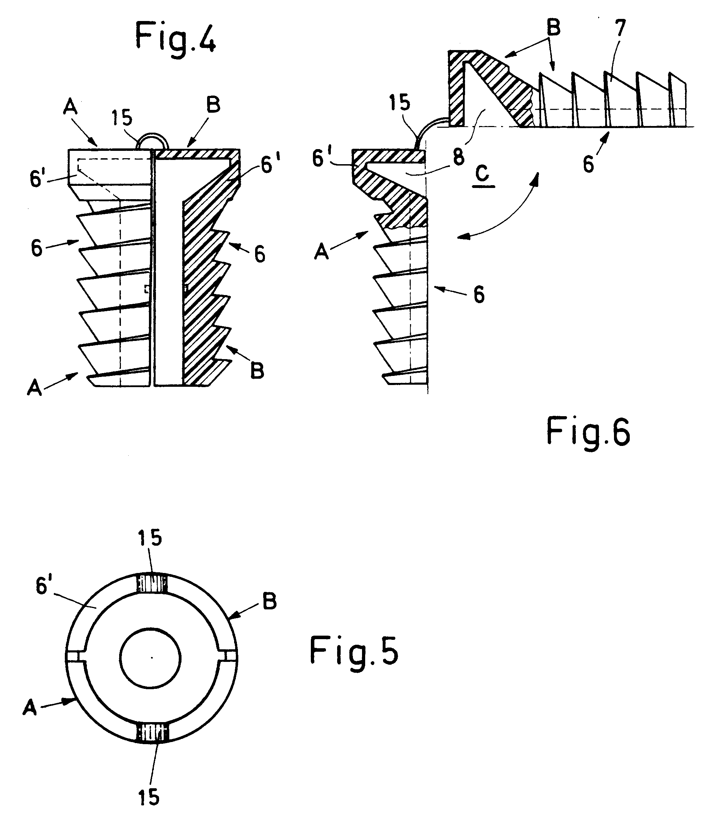

Nach Fig. 4 bis 6 besteht das Verbindungselement 6 aus zwei gleichförmigen Längshälften A, B. An den Oberseiten der Bundteile 6′ sind die beiden Längshälften A, B aneinander gegenüberliegenden Seiten durch zwei bandförmige Gelenkglieder 15 verschwenkbar miteinander verbunden. Die Gelenkglieder 15 bestehen aus herkömmlichem, deformierbarem Material wie zähelastischem Kunststoff. Die Längshälften A, B bestehen mit den Gelenkgliedern 15 aus einem Ganzen, was die Herstellung, sei es im Giess- oder Pressverfahren wesentlich vereinfacht und verbilligt. Das Verbindungshilfselement 6 nach Fig. 4 bis 6 erfordert bei der Herstellung eine einfachere Form und ermöglicht stärkere Ausführungen. Ein weiterer Vorzug ist, dass die Schraube 9 nach Oeffnung des Verbindungshilfselementes 6 was durch Ausschwenken der Längshälfte B um 45 Grad in Richtung des Pfeiles C in die in Fig. 5 gezeigte Stellung bewirkt wird, rasch und ordnungsgemäss in die eine der Längshälften A oder B sich einlegen lässt. Das Herausnehmen der Schraube 9 kann nach erfolgter Auseinanderschwenkung der beiden Längshälften A, B sekundenschnell vorgenommen werden.

## Patentansprüche

1. Duebelverbindung dicht oder im Abstand nebeneinander befindlicher Konstruktionsstuecke [1, 4], welche fluchtende Bohrungen [5] aufweisen, die von einer Senkkopfschraube [9] durchsetzt sind, derart, dass die Konstruktionsstuecke [1, 4] loesbar und nachspannbar miteinander verbunden sind, wobei die Senkkopfschraube [9] mit ihrem konischen Kopf [9′] in ein Verbindungshilfselement [6] drehbar, aber axial unverschiebbar eingesetzt ist, das sich auf einer Abstufung in einer der Bohrungen [5] abstuetzt, wobei sich das Verbindungshilfselement [6] beim Eindrehen der Senkkopfschraube [9] durch die Anlage des Kopfes [9′] ausdehnt und durch Reibungsschluss eine elastische, justierbare und loesbare Verbindung mit dem die Abstufung enthaltenden Konstruktionsstueck [1] herstellbar ist, dadurch **gekennzeichnet**, dass das Verbindungselement [6] einen nach aussen gerichteten Bund [6′] aufweist, der einen den Kopf [9′] der Senkkopfschraube [9] aufnehmenden erweiterten Innenraum [8] enthaelt, in dem ein zum Kopf [9′] gerichteter Stuetzring [11] vorgesehen ist, an welchem der Kopf [9′] anliegt, wobei lediglich der Bund ausdehnbar ist und sich auf der Abstufung abstuetzt.

2. Duebelverbindung nach Patentanspruch 1, dadurch gekennzeichnet, dass das Verbindungshilfselement (6) einen Hohlschaft (6″) besitzt, der mit einem Aussengewinde (7) versehen ist.

3. Duebelverbindung nach den Anspruechen 1 und 2, dadurch gekennzeichnet, dass der Bund (6′) am Verbindungshilfselement (6) an der freiliegenden Randseite mit Einschnitten (13) versehen ist.

4. Duebelverbindung nach den Patentanspruechen 1 bis 3, dadurch gekennzeichnet, dass das Verbindungshilfselement (6) aus zwei gleichfoermigen Laengshaelften (A, B) besteht, welche verschwenkbar miteinander verbunden sind.

5. Duebelverbindung nach den Patentanspruechen 1 bis 4, dadurch gekennzeichnet, dass die beiden Laengshaelften (A, B) durch bandartige, elastische Gelenkglieder (15) miteinander verschwenkbar verbunden sind.

6. Duebelverbindung nach den Patentanspruechen 1, 2, 4 und 5, dadurch gekennzeichnet, dass die beiden Laengshaelften (A, B)und dieGelenkglieder (15) aus je einem Ganzen bestehen.

7. Duebelverbindung nach den Patentanspruechen 1, 2, 4, 5 und 6, dadurch gekennzeichnet, dass die beiden Laengshaelften (A, B) und die Gelenkglieder (15) aus zaehelastischem Kunststoff bestehen.

8. Duebelverbindung nach den Patentanspruechen 1, 2, 4, 5, 6 und 7, dadurch gekennzeichnet, dass die zaehelastischen Gelenkglieder (15) sich am Bund (6′) vom Verbindungshilfselement (6) befinden.

## Claims

1. Dowel assembly comprising structural units [1, 4] which are directly adjacent to one another or a distance apart and which have flush holes [5] which are penetrated by a countersunk screw [9] in such a way that the structural units [1, 4] are connected to one another so that they can be detached and tightened, the countersunk screw [9] with its conical head [9'] being inserted rotatably but axially non-displaceably in a connecting element [6] which is supported on a step in one of the holes [5], the connecting element [6] expanding on contact with the head [9'] when the countersunk screw [9] is screwed in, and it being possible to produce an elastic, adjustable and detachable connection to the step-containing structural unit [1] by frictional contact, characterised in that the connecting element [6] has an outward-directed collar [6'] which contains a broader inner space [8] which receives the head [9'] of the countersunk screw [9] and in which a support ring [11] which is directed towards the head [9'] and on which the head [9'] rests is provided, only the collar being expandable and being supported on the step.

2. Dowel assembly according to Claim 1, characterised in that the connecting element (6) has a hollow shaft (6″) which is provided with an outer thread (7).

3. Dowel assembly according to Claims 1 and 2, characterised in that the collar (6') is provided with incisions [13] on the exposed edge side.

4. Dowel assembly according to Claims 1 to 3, characterised in that the connecting element [6] consists of two identically shaped longitudinal halves (A, B) which are rotatably connected to one another.

5. Dowel assembly according to Claims 1 to 4, characaterised in that the two longitudinal halves (A, B) are rotatably connected to one another by band-like, elastic articulated elements (15).

6. Dowel assembly according to Claims 1, 2, 4 and 5, characterised in that the two longitudinal halves (A, B) and the articulated elements (15) form an integral unit.

7. Dowel assembly according to Claims 1, 2, 4, 5 and 6, characterised in that the longitudinal halves (A, B) and the articulated elements (15) consist of tough and resilient plastic.

8. Dowel assembly according to Claims 1, 2, 4, 5, 6 and 7, characterised in that the tough and resilient articulated elements (15) are located on the collar (6') of the connecting element (6).

## Revendications

1. Assemblage à cheville jointif ou avec intervalle de pièces de construction se trouvant l'une près de l'autre (1, 4), qui comportent des perçages (5) alignés, traversés par un boulon à tête conique (9), de sorte, que les pièces de construction (1, 4) se trouvent assemblées de façon détachable et avec serrage possible l'une sur l'autre, le boulon (9) avec sa tête conique (9') étant introduit avec possibilité de tourner mais sans déplacement axial possible dans un élément auxiliaire d'assemblage qui s'appuie sur une gradation dans un des perçages (5), l'élément auxiliaire d'assemblage (6) s'élargissant lors de l'introduction par vissage du boulon à tête conique par suite de la construction de la tête (9) et un assemblage élastique, ajustable et détachable étant réalisable par suite de la fermeture par frottement avec la pièce de construction (1) comportant la gradation, caractérisé en ce que l'élément d'assemblage (6) comporte une collerette (6') dirigée vers l'extérieur, avec un espace intérieur (8) s'évasant, recevant la tête (9') du boulon à tête conique (9), dans lequel est prévue une couronne d'appui (11) dirigée vers la tête (9'), sur laquelle repose la tête (9'), seule la collerette étant extensible et s'appuyant sur la gradation.

2. Assemblage à cheville selon la revendication 1, caractérisé en ce que l'élément auxiliaire d'assemblage (6) a une tige creuse (6″), munie d'un filetage extérieur (7).

3. Assemblage à cheville selon les revendications 1 et 2, caractérisé en ce que la collerette (6') de l'élément d'assemblage (6) est munie d'encoches (13) sur sa face de bord libre.

4. Assemblage à cheville selon les revendications 1 à 3, caractérisé en ce que l'élément auxiliaire d'asssemblage (6) se compose de deux moitiés en longueur identiques (A, B), qui sont reliées l'une à l'autre en pouvant pivoter.

5. Assemblage à cheville selon les revendications 1 à 4, caractérisé en ce que les deux moitiés en longueur (A, B) sont reliées avec pivotement possible par des éléments d'articulation (15) de type ruban, élastiques.

6. Assemblage à cheville selon les revendications 1, 2, 4 et 5, caractérisé en ce que les deux moitiés en longueur (A, B) et les éléments d'articulation constituent un ensemble.

7. Assemblage à cheville selon les revendications 1, 2, 4, 5 et 6, caractérisé en ce que les deux moitiés en longueur (A, B) et les éléments d'articulation (15) sont constitués de matière synthétique viscoplastique.

8. Assemblage à cheville selon les revendications 1, 2, 4, 5, 6 et 7, caractérisé en ce que les éléments d'articulation (15) viscoplastiques se trouvent liés à la collerette (6') de l'élément auxiliaire d'assemblage (6).

# Fig.1

# Fig.3

# Fig.2

# Fig.4

# Fig.6

# Fig.5